# FASCICULE DE BREVET EUROPEEN

(11) **EP 4 228 912 B1**
(45) Date de publication et mention de la délivrance du brevet: **12.03.2025**
(21) Numéro de dépôt: 22823389.6
(22) Date de dépôt: 29.11.2022
(51) Int. Cl.: B60K 15/03, B65D 90/52, B60K 15/077

(54) **ACCESSOIRE FIXÉ À UN RÉSERVOIR DE VÉHICULE**
AN EINEM FAHRZEUGTANK BEFESTIGTES ZUBEHÖR
ACCESSORY FASTENED TO A VEHICLE TANK

(30) Priorité: 30.11.2021 LU 500930
(43) Date de publication de la demande: 23.08.2023
(73) Titulaire: Plastic Omnium Advanced Innovation And Research, 1130 Bruxelles (BE)
(72) Inventeur: LEMAIRE, Jean-Christophe, 1130 Bruxelles (BE)
(74) Mandataire: LLR
(86) Numéro de dépôt international: PCT/EP2022/083674
(87) Numéro de publication internationale: WO 2023/099477

(56) Documents cités:
- EP-A1- 2 916 017
- WO-A1-2020/039076
- US-A1- 2011 226 777

## Description

L'invention concerne un réservoir de véhicule automobile. Plus particulièrement, l'invention concerne un accessoire pour réservoir de véhicule et un réservoir de véhicule comprenant un tel accessoire.

Un véhicule automobile peut comprendre plusieurs réservoirs destinés à stocker des liquides assurant différentes fonctions dans l'utilisation du véhicule. On peut notamment mentionner le réservoir de carburant, utilisé notamment pour alimenter un moteur thermique du véhicule, ou le réservoir d'urée, utilisée à des fins de réduction des oxydes présents dans les gaz d'échappement. Ces réservoirs sont généralement équipés d'un ou plusieurs accessoires assurant diverses fonctions. A titre d'exemple non limitatif, un réservoir peut être équipé d'un baffle anti-bruit qui a pour but d'atténuer le bruit associé aux vagues de liquide qui peuvent être générées au sein du réservoir lorsque le véhicule accélère, freine ou prend un virage. Un tel baffle est également appelé baffle « anti-slosh » dans le jargon du métier. Il exerce un effet anti-ballottement, c'est-à-dire qu'il limite le mouvement du liquide dans le réservoir.

L'accessoire peut être fixé dans le réservoir à la paroi supérieure de celui-ci. Classiquement, dans le cas des réservoirs en plastique obtenus par extrusion-soufflage, l'accessoire est introduit et fixé dans le réservoir après la fabrication de ce dernier, à travers une ouverture réalisée dans la paroi de celui-ci. Le document EP 2 916 017 A1 divulgue un accessoire selon le préambule de la revendication 1.

Néanmoins, cette fixation de l'accessoire peut poser des problèmes. En effet, la fixation de l'accessoire est compliquée à mettre en œuvre étant donné qu'il faut manipuler l'accessoire à travers une ouverture qui présente souvent de faibles dimensions, si bien qu'on ne peut pas manœuvrer l'accessoire aussi bien qu'on le souhaiterait. En outre, des réservoirs différents peuvent présenter des épaisseurs de paroi différentes, ce qui peut poser des problèmes de compatibilité entre un accessoire et un réservoir donné. Cette disparité dans l'épaisseur de la paroi du réservoir peut avoir plusieurs causes. Par exemple, la nature du liquide qui sera contenu dans le réservoir peut imposer une contrainte sur l'épaisseur du réservoir. Autre exemple, le procédé de fabrication du réservoir présente une tolérance de dimension dans la direction de l'épaisseur du réservoir qui n'est pas nulle.

L'invention a notamment pour but de remédier à ces problèmes en proposant un accessoire pour réservoir présentant de moindres contraintes de compatibilité avec les réservoirs.

A cet effet l'invention a pour objet un accessoire pour réservoir de véhicule selon la revendication 1.

Par « la distance entre l'au moins un organe de fixation et la tête de la tige étant égale à une valeur prédéterminée indépendante du réservoir », on entend désigner le fait que la distance entre l'au moins un organe de fixation et la tête de la tige reste inchangée, que la tête soit couplée ou non à une paroi de réservoir quand le corps de la tige est fixé à l'organe de fixation.

Ainsi, grâce au fait que la distance entre l'au moins un organe de fixation et la tête de la tige est égale à une valeur prédéterminée indépendante du réservoir, on s'affranchit des variations ou incertitudes liées à l'épaisseur de la paroi du réservoir. Il s'ensuit que l'accessoire est adapté à tout type de réservoir, ce qui lui confère une très grande compatibilité. De plus, l'accessoire comprend des moyens simples permettant sa fixation à la paroi du réservoir, à savoir un couplage entre une tige et au moins un organe de connexion, de sorte que l'invention ne complexifie pas la fixation entre l'accessoire et le réservoir.

Selon l'invention, la partie principale et l'au moins un organe de fixation sont d'un seul tenant.

L'accessoire comporte ainsi un faible nombre de pièces constitutives, ce qui le rend simple à fabriquer et à assembler. En outre, cela permet de réaliser la partie principale et l'au moins un organe de fixation en une seule opération de moulage et démoulage dans le cas où ils sont réalisés en matière plastique.

Avantageusement, l'au moins une nervure s'étend tout autour du corps de la tige et présente une forme s'évasant en direction de la tête de la tige.

L'au moins une nervure présente ainsi une forme simple à réaliser et peut assurer une fonction d'anti-déchaussement de la tige lorsque la tige s'étend dans l'au moins un organe de fixation.

Selon l'invention, l'au moins un organe de fixation comprend des formes en relief proximale et distale espacées l'une de l'autre, la forme en relief proximale étant située entre la tête de la tige et la forme en relief distale lorsque la tige est fixée à l'au moins un organe de fixation, les formes en relief proximale et distale présentant respectivement un orifice proximal et un orifice distal qui sont coaxiaux.

En prévoyant ces deux formes en relief et leurs orifices respectifs, on permet à l'au moins un organe de fixation d'empêcher toute rotation de la tige par rapport à l'au moins un organe de fixation selon un axe perpendiculaire à un axe principal de la tige. Cela supprime ainsi un jeu de rotation de la tige par rapport à l'au moins un organe de fixation et améliore la robustesse de la fixation de l'accessoire au réservoir.

De préférence, l'orifice proximal présente une section d'aire supérieure à celle d'une section de l'orifice distal.

De préférence, le diamètre de l'orifice distal est supérieur au diamètre du corps de la tige et est tel qu'il empêche le passage de l'au moins une nervure à travers l'orifice distal.

La forme en relief distale forme ainsi une butée de la course de la tige à travers l'au moins un organe de fixation, ce qui permet d'assurer le bon positionnement de la tige par rapport à l'au moins un organe de fixation.

Avantageusement, l'au moins un organe de fixation comprend des ailettes flexibles s'étendant dans l'orifice proximal et permettant le passage du corps de la tige et de l'au moins une nervure à travers l'orifice proximal.

De préférence, les ailettes flexibles sont configurées pour bloquer tout déplacement du corps de la tige l'éloignant de la forme en relief distale lorsque le corps de la tige s'étend à travers l'orifice proximal.

Par « flexible », on entend que les ailettes peuvent se déformer élastiquement pour permettre le passage du corps de la tige et des nervures.

Les ailettes assurent ainsi une fonction d'anti-déchaussement de la tige lorsqu'elle s'étend dans l'orifice proximal, en coopérant avec l'au moins une nervure de la tige.

Avantageusement, la partie principale forme un bouclier thermique, un canister ou un baffle pour réservoir de véhicule.

L'invention peut ainsi être adaptée à plusieurs types d'accessoires, ce qui contribue à sa souplesse d'implémentation.

Avantageusement, le nombre d'organe de fixation est égal à 1.

L'accessoire présente ainsi un design simple et peut être fabriqué facilement tout en étant peu onéreux.

Avantageusement, l'orifice proximal est de section non-circulaire, le corps de la tige présentant, entre l'au moins une nervure et la tête, une section droite non-circulaire configurée pour empêcher une rotation de la tige dans l'orifice proximal.

En prévoyant ces formes de section pour l'orifice proximal et le corps de la tige, on permet à l'au moins un organe de fixation d'empêcher toute rotation de la tige par rapport à l'au moins un organe de fixation selon un axe parallèle à un axe principal de la tige, cela étant particulièrement avantageux dans le cas où l'accessoire est fixé par un organe de fixation unique. Cela permet aussi d'assurer un bon positionnement de l'accessoire par rapport au réservoir et d'améliorer la robustesse de la fixation de l'accessoire au réservoir.

Avantageusement, la tête de la tige comprend une dent de positionnement s'étendant radialement par rapport à un axe principal de la tige.

On peut ainsi facilement s'assurer du bon positionnement angulaire de la tige par rapport au réservoir lors de son installation.

On prévoit également selon l'invention un réservoir de véhicule comprenant une paroi munie d'une ouverture et comprenant un accessoire, tel que défini dans ce qui précède, couplé à la paroi en s'étendant à travers l'ouverture.

Avantageusement, la paroi du réservoir comprend un marquage positionné pour pouvoir s'aligner avec la dent de positionnement.

On peut ainsi facilement s'assurer du bon positionnement angulaire de la tige par rapport au réservoir lors de son installation.

Dans un mode de réalisation préféré de l'invention, la paroi est une paroi externe du réservoir et l'accessoire est couplé de manière étanche à la paroi.

Par « paroi externe », on entend désigner une paroi qui délimite un volume interne du réservoir.

Avantageusement, la tête de la tige est fixée de manière étanche à la paroi. De préférence, la tête de la tige est fixée par soudage.

Dans un autre mode de réalisation de l'invention, la paroi est une paroi interne du réservoir et la tête est couplée à la paroi en servant de butée à celle-ci.

Par « paroi interne », on entend désigner une paroi située dans le volume interne du réservoir. Par conséquent, la paroi interne du réservoir est une paroi interne au réservoir.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue partielle en perspective d'un réservoir de véhicule comprenant un accessoire selon l'invention, et
[Fig. 2] la figure 2 est une vue du réservoir et de l'accessoire de la figure 1 en section dans un plan incluant un axe principal de l'accessoire.

### Description détaillée

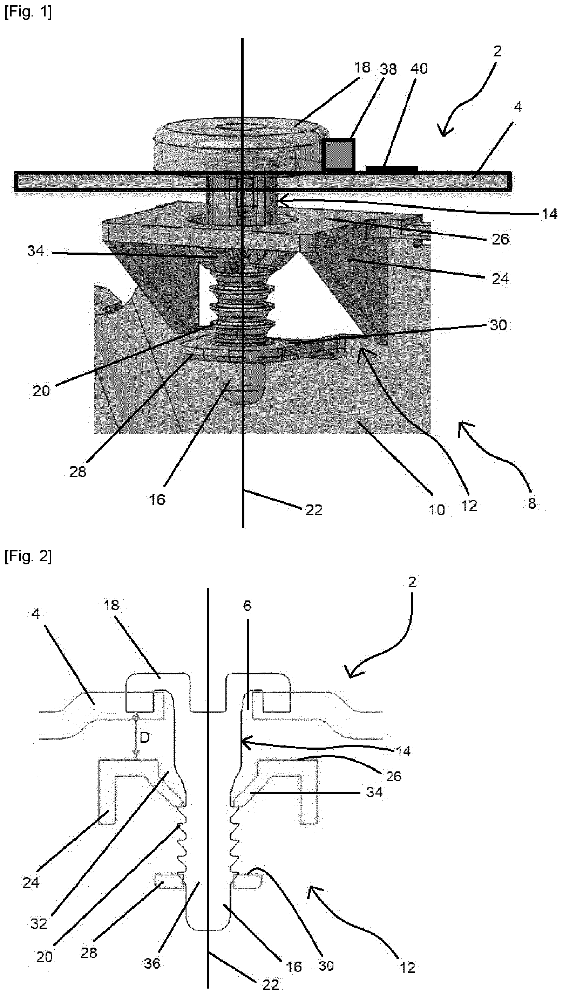

On a représenté en figure 1 une partie d'un réservoir 2 selon l'invention. Il s'agit d'un réservoir 2 destiné à stocker un liquide dans un véhicule automobile, par exemple du carburant ou tout autre liquide nécessaire ou utile au fonctionnement du véhicule. Le réservoir 2 comprend une paroi 4 délimitant un volume interne du réservoir 2, de ce fait, la paroi 4 est aussi appelée paroi externe du réservoir. La portion de paroi 4 représentée sur la figure 1 est une partie d'une paroi supérieure du réservoir 2. La paroi 4 présente une ouverture 6, illustrée sur la figure 2 qui représente en section la partie du réservoir 2 de la figure 1, traversant la paroi 4 dans toute son épaisseur. L'ouverture 6 a ici une section droite circulaire.

Le réservoir 2 comprend un accessoire 8 fixé à la paroi 4 du réservoir. L'accessoire 8 comprend une partie principale 10 destinée à assurer la fonction de l'accessoire 8. Ici, la partie principale 10 forme un baffle configuré pour atténuer le bruit associé aux vagues de liquide qui peuvent être générées au sein du réservoir 2. A titre de variante, on peut prévoir que la partie principale forme un bouclier thermique ou un canister pour réservoir de véhicule.

L'accessoire 8 comprend au moins un organe de fixation 12 permettant la fixation de la partie principale 10 à la paroi 4 du réservoir 2. L'accessoire 8 comprend ici un unique organe de fixation 12, mais on peut prévoir que l'accessoire 8 comprenne un plus grand nombre d'organes de fixation 12, par exemple deux ou plus.

L'accessoire 8 comprend au moins une tige 14 présentant deux parties, à savoir un corps 16 et une tête 18. Le nombre de tiges 14 est égal au nombre d'organes de fixation 12. Dans le mode de réalisation illustré, le nombre d'organes de fixation 12 étant égal à 1, l'accessoire 8 comprend uniquement une tige 14.

Le corps 16 de la tige présente au moins une nervure 20. Le corps 16 comprend ici plusieurs nervures 20, au nombre de cinq sur le mode de réalisation non limitatif illustré en figure 1. Chaque nervure 20 se présente sous la forme d'une bague s'étendant, d'une part, radialement tout autour du corps 16 de la tige en considérant un axe principal 22 de la tige 14 et, d'autre part, à distance d'extrémités axiales du corps 16 de la tige en considérant l'axe principal 22 de la tige 14. Chaque nervure 20 présente une forme s'évasant en direction de la tête 18 de la tige. En d'autres termes, chaque nervure 20 présente un épaulement mâle orienté vers la tête 18 de la tige.

La tête 18 de la tige est configurée pour être couplée de manière étanche à la paroi 4 du réservoir du côté extérieur de celle-ci et se présente sous la forme d'un cylindre fin d'axe coïncidant avec l'axe principal 22 et de diamètre supérieur au diamètre de l'ouverture 6 de la paroi 4. Le corps 16 de la tige s'étend à travers l'ouverture 6 de la paroi 4 de sorte que le corps 16 et la tête 18 de la tige s'étendent de part et d'autre de la paroi 4, la tête étant fixée de manière étanche à la paroi 4 du réservoir. De préférence, la tête 18 de la tige est soudée de manière étanche à la paroi 4 du réservoir.

L'organe de fixation 12 comprend une forme en relief proximale 24 qui s'étend perpendiculairement à la partie principale 10 de l'accessoire de sorte qu'elle comprend une surface proximale 26 parallèle à la paroi 4 du réservoir à l'état assemblé. L'organe de fixation 12 comprend en outre une forme en relief distale 28 qui s'étend perpendiculairement à la partie principale 10 de l'accessoire de sorte qu'elle comprend une surface distale 30 parallèle à la paroi 4 du réservoir à l'état assemblé. Les formes en relief proximale 24 et distale 28 sont positionnées de sorte que la forme en relief proximale 24 est située entre la paroi 4 du réservoir et la forme en relief distale 28 à l'état assemblé. Les formes en relief proximale 24 et distale 28 et la partie principale 10 sont d'un seul tenant, de sorte que l'organe de fixation 12 et la partie principale 10 sont d'un seul tenant.

En référence à la figure 2 qui est une vue en coupe de l'accessoire 8, la forme en relief proximale 24 présente un orifice proximal 32 ménagé dans la surface proximale 26 et dimensionné pour recevoir la tige 14. La forme en relief proximale 24 comprend en outre des ailettes flexibles 34 s'étendant dans l'orifice proximal 32, en direction de la forme en relief distale 28, et permettent le passage du corps 16 de la tige et de la nervure 20 à travers l'orifice proximal 32. L'extrémité de chaque ailette 34 présente une surface plane parallèle à la surface proximale 26 de sorte qu'elle peut s'appuyer contre les nervures 20 afin de bloquer tout déplacement du corps 16 de la tige l'éloignant de la forme en relief distale 28 lorsque le corps 16 de la tige s'étend à travers l'orifice proximal 32. En d'autres termes, les ailettes 34 et les nervures 20 forment des moyens de blocage de la tige 14 dans l'organe de fixation 12. Alternativement, on peut prévoir que les extrémités des ailettes soient pointues ou effilées.

La forme en relief distale 28 présente un orifice distal 36 ménagé dans la surface distale 30 et dimensionné pour d'une part recevoir la tige 14, les orifices proximal 32 et distal 36 étant coaxiaux, et d'autre part bloquer le passage des nervures 20. En d'autres termes, le diamètre de l'orifice distal 36 est supérieur ou égal au diamètre du corps 16 de la tige et inférieur au diamètre des nervures 20. Ainsi, comme cela est illustré en figure 1, l'orifice distal 36 forme une butée de la course axiale de la tige 14 à travers l'organe de fixation 12. Les formes en relief proximale 24 et distale 28 coopèrent pour former des moyens de positionnement axial de la tige 14 dans l'organe de fixation 12. Ainsi, la distance séparant l'organe de fixation 12 et la tête 18 de la tige est égal à une valeur prédéterminée ne dépendant que des dimensions de l'organe de fixation 12 et de la tige 14, et ne dépendant pas de l'épaisseur de la paroi 4 du réservoir 2. Cette distance est représentée par une flèche D reliant la surface proximale 26 et une surface inférieure de la tête 18 de la tige.

En outre, les ailettes 34 coopèrent avec l'orifice distal 36 pour empêcher toute rotation de la tige 14 par rapport à un axe perpendiculaire à l'axe principal 22 de la tige, le corps 16 de la tige étant serré entre les ailettes 34 et dans l'orifice distal 36.

Entre la tête 18 et les nervures 20, le corps 16 de la tige présente une section droite non-circulaire configurée pour empêcher une rotation de la tige dans l'orifice proximal 32. La section droite du corps 16 de la tige peut par exemple être carrée ou rectangulaire. Le corps 16 de la tige coopère avec une section non-circulaire de l'orifice proximal 32, formée par la présence des ailettes 34, pour empêcher une rotation de la tige 14 dans l'orifice proximal 32 autour de l'axe principal 22. Pour faciliter le positionnement angulaire de la tige 14 par rapport à l'organe de fixation 12 et afin d'assurer un bon blocage en rotation de la tige 14 par rapport à l'organe de fixation 12 autour de l'axe principal 22, la tête 18 de la tige comprend une dent de positionnement 38 s'étendant radialement par rapport à l'axe principal 22 de la tige 14, et la paroi du réservoir 4 comprend un marquage 40 positionné pour pouvoir s'aligner avec la dent de positionnement 38.

La fixation de l'accessoire 8 dans le réservoir 2 est réalisé de la manière suivante. On insère la partie principale 10 et l'organe de fixation 12 à l'intérieur du réservoir 2, à proximité de l'ouverture 6 prévue dans la paroi 4, et on positionne l'organe de fixation de sorte que l'ouverture 6, l'orifice proximal 32 et l'orifice distal 36 soient coaxiaux. On insère le corps 16 de la tige à travers l'ouverture 6, et on force son passage à travers l'orifice proximal 32, les nervures 20 écartant les ailettes 34 lors de leur passage. Le corps 16 de la tige passe également à travers l'orifice distal 36, jusqu'à ce que la nervure 20 la plus proche de l'extrémité axiale du corps 16 de la tige arrive en butée contre la surface distale 30 autour de l'orifice distal 36. A ce moment-là, la tête 18 de la tige est en butée contre la paroi 4 du réservoir, et une des nervures 20 s'appuie contre les extrémités des ailettes 34. La tige 14 est ainsi immobilisée, et l'accessoire est rendu solidaire de la paroi 4 du réservoir 2. Le couplage étanche de l'accessoire 8 à la paroi 4 est assuré par soudage de la tête 18 à la paroi 4 du réservoir 2.

Dans un autre exemple où la paroi 4 du réservoir 2 est une paroi interne du réservoir, le couplage de l'accessoire 8 à la paroi 4 n'a pas besoin d'être étanche, dans ce cas, la tête 18 est couplée à la paroi 4 en servant de butée à celle-ci.

L'invention n'est pas limitée aux modes de réalisation présentés et d'autres modes de réalisation apparaîtront clairement à l'homme du métier. De telles modifications ne sont possibles que dans l'étendue de la protection de l'invention, qui est définie uniquement par les revendications annexées.

### Liste de références

2 : réservoir
4 : paroi
6 : ouverture
8 : accessoire
10 : partie principale
12 : organe de fixation
14 : tige
16 : corps de la tige
18 : tête de la tige
20 : nervure
22 : axe principal
24 : forme en relief proximale
26 : surface proximale
28 : forme en relief distale
30 : surface distale
32 : orifice proximal
34 : ailette
36 : orifice distal
38 : dent de positionnement
40 : marquage

## Revendications

1. Accessoire (8) pour réservoir de véhicule, comprenant :
- une partie principale (10) de l'accessoire,
- au moins un organe de fixation (12) de la partie principale (10) à un réservoir, la partie principale (10) et l'au moins un organe de fixation (12) étant d'un seul tenant,
- une tige (14) comprenant un corps (16), présentant au moins une nervure (20) configurée pour être fixée à l'au moins un organe de fixation (12), et une tête (18), configurée pour être couplée à une paroi d'un réservoir,
la distance entre l'au moins un organe de fixation (12) et la tête (18) de la tige étant égale à une valeur prédéterminée,
**caractérisé en ce que** l'au moins un organe de fixation (12) comprend des formes en relief proximale (24) et distale (28) espacées l'une de l'autre, la forme en relief proximale (24) étant située entre la tête (18) de la tige et la forme en relief distale (28) lorsque la tige (14) est fixée à l'au moins un organe de fixation (12), les formes en relief proximale (24) et distale (28) présentant respectivement un orifice proximal (32) et un orifice distal (36) qui sont coaxiaux.

2. Accessoire (8) selon la revendication précédente, dans lequel l'au moins une nervure (20) s'étend tout autour du corps (16) de la tige et présente une forme s'évasant en direction de la tête (18) de la tige.

3. Accessoire (8) selon l'une quelconque des revendications précédentes, dans lequel l'orifice proximal (32) présente une section d'aire supérieure à celle d'une section de l'orifice distal (36).

4. Accessoire (8) selon l'une quelconque des revendications précédentes, dans lequel le diamètre de l'orifice distal (36) est supérieur au diamètre du corps (16) de la tige et est tel qu'il empêche le passage de l'au moins une nervure (20) à travers l'orifice distal (36).

5. Accessoire (8) selon l'une quelconque des revendications précédentes, dans lequel l'au moins un organe de fixation (12) comprend des ailettes flexibles (34) s'étendant dans l'orifice proximal (32) et permettant le passage du corps (16) de la tige et de l'au moins une nervure (20) à travers l'orifice proximal (32).

6. Accessoire (8) selon la revendication précédente, dans lequel les ailettes flexibles (34) sont configurées pour bloquer tout déplacement du corps (16) de la tige l'éloignant de la forme en relief distale (28) lorsque le corps (16) de la tige s'étend à travers l'orifice proximal (32).

7. Accessoire (8) selon l'une quelconque des revendications précédentes, dans lequel la partie principale (10) forme un bouclier thermique, un canister ou un baffle pour réservoir de véhicule.

8. Accessoire (8) selon l'une quelconque des revendications précédentes, dans lequel le nombre d'organe de fixation (12) est égal à 1.

9. Accessoire (8) selon l'une quelconque des revendications précédentes, dans lequel l'orifice proximal (32) est de section non-circulaire, le corps (16) de la tige présentant, entre l'au moins une nervure (20) et la tête (18), une section droite non-circulaire configurée pour empêcher une rotation de la tige (14) dans l'orifice proximal (32).

10. Accessoire (8) selon l'une quelconque des revendications précédentes, dans lequel la tête (18) de la tige comprend une dent de positionnement (38) s'étendant radialement par rapport à un axe principal (22) de la tige (14).

11. Réservoir (2) de véhicule comprenant une paroi (4) munie d'une ouverture (6) et comprenant un accessoire (8) selon l'une quelconque des revendications précédentes couplé à la paroi (4) en s'étendant à travers l'ouverture (6).

12. Réservoir (2) de véhicule selon les revendications 10 et 11, dans lequel la paroi (4) du réservoir (2) comprend un marquage (40) positionné pour pouvoir s'aligner avec la dent de positionnement (38).

13. Réservoir (2) de véhicule selon l'une quelconque des revendications 11 à 12, dans lequel la paroi (4) est une paroi externe du réservoir (2) et l'accessoire (8) est couplé de manière étanche à la paroi (4).

14. Réservoir (2) de véhicule selon la revendication précédente, dans lequel la tête (18) de la tige est fixée de manière étanche à la paroi (4).

15. Réservoir (2) de véhicule selon l'une quelconque des revendications 11 à 12, dans lequel la paroi (4) est une paroi interne du réservoir (2) et la tête (18) de la tige est couplée à la paroi (4) en servant de butée à celle-ci.

## Patentansprüche

1. Zubehör (8) für einen Fahrzeugtank, aufweisend:
- ein Hauptteil (10) des Zubehörs,
- mindestens ein Element (12) zur Befestigung des Hauptteils (10) an einem Tank, wobei der Hauptteil (10) und das mindestens eine Befestigungselement (12) einstückig sind,
- einen Schaft (14) mit einem Körper (16), der mindestens eine Rippe (20) aufweist, die ausgebildet ist, an dem mindestens einen Befestigungselement (12) befestigt zu werden, und einen Kopf (18), der ausgebildet ist, mit einer Wand eines Tanks gekoppelt zu werden, wobei der Abstand zwischen dem mindestens einen Befestigungselement (12) und dem Kopf (18) des Schafts gleich einem vorbestimmten Wert ist,
**dadurch gekennzeichnet, dass** das mindestens eine Befestigungselement (12) proximale (24) und distale (28) Reliefformen aufweist, die voneinander beabstandet sind, wobei die proximale Reliefform (24) zwischen dem Kopf (18) des Schafts und der distalen Reliefform (28) angeordnet ist, wenn der Schafts (14) an dem mindestens einen Befestigungselement (12) befestigt ist, wobei die proximale (24) und die distale (28) Reliefform jeweils eine proximale Öffnung (32) und eine distale Öffnung (36) aufweisen, die koaxial sind.

2. Zubehör (8) nach dem vorhergehenden Anspruch, wobei sich die mindestens eine Rippe (20) rund um den Schaftkörper (16) erstreckt und eine Form aufweist, die sich in Richtung des Kopfs (18) Schafts verbreitert.

3. Zubehör (8) nach einem der vorhergehenden Ansprüche, wobei die proximale Öffnung (32) einen Flächenquerschnitt aufweist, der größer ist als ein Querschnitt der distalen Öffnung (36).

4. Zubehör (8) nach einem der vorhergehenden Ansprüche, wobei der Durchmesser der distalen Öffnung (36) größer ist als der Durchmesser des Schaftkörpers (16) und so beschaffen ist, dass er den Durchgang der mindestens einen Rippe (20) durch die distale Öffnung (36) verhindert.

5. Zubehör (8) nach einem der vorhergehenden Ansprüche, wobei das mindestens eine Befestigungselement (12) flexible Flügel (34) aufweist, die sich in die proximale Öffnung (32) erstrecken und den Durchgang des Schaftkörpers (16) und der mindestens einen Rippe (20) durch die proximale Öffnung (32) ermöglichen.

6. Zubehör (8) nach dem vorhergehenden Anspruch, wobei die flexiblen Flügel (34) so ausgebildet sind, dass sie eine Bewegung des Schaftkörpers (16) weg von der distalen Reliefform (28) blockieren, wenn sich der Schaftkörper (16) durch die proximale Öffnung (32) erstreckt.

7. Zubehör (8) nach einem der vorhergehenden Ansprüche, wobei der Hauptteil (10) einen Hitzeschild, einen Kanister oder eine Schallwand für einen Fahrzeugtank bildet.

8. Zubehör (8) nach einem der vorhergehenden Ansprüche, wobei die Anzahl der Befestigungselemente (12) gleich 1 ist.

9. Zubehör (8) nach einem der vorhergehenden Ansprüche, wobei die proximale Öffnung (32) einen nicht kreisförmigen Querschnitt aufweist, wobei der Schaftkörper (16) zwischen der mindestens einen Rippe (20) und dem Kopf (18) einen nicht kreisförmigen geraden Abschnitt aufweist, der so ausgebildet ist, dass er eine Drehung des Schafts (14) in der proximalen Öffnung (32) verhindert.

10. Zubehör (8) nach einem der vorhergehenden Ansprüche, wobei der Kopf (18) des Schafts einen Positionierungszahn (38) aufweist, der sich radial zu einer Hauptachse (22) des Schafts (14) erstreckt.

11. Fahrzeugtank (2) aufweisend eine Wand (4), die mit einer Öffnung (6) versehen ist, und ein Zubehör (8) nach einem der vorhergehenden Ansprüche, das mit der Wand (4) gekoppelt ist, indem es sich durch die Öffnung (6) erstreckt.

12. Fahrzeugtank (2) nach den Ansprüchen 10 und 11, wobei die Wand (4) des Tanks (2) eine Markierung (40) aufweist, die so positioniert ist, dass sie mit dem Positionierungszahn (38) ausgerichtet werden kann.

13. Fahrzeugtank (2) nach einem der Ansprüche 11 bis 12, wobei die Wand (4) eine Außenwand des Tanks (2) ist und das Zubehör (8) dicht mit der Wand (4) gekoppelt ist.

14. Fahrzeugtank (2) nach dem vorhergehenden Anspruch, bei dem der Kopf (18) des Schafts dicht an der Wand (4) befestigt ist.

15. Fahrzeugtank (2) nach einem der Ansprüche 11 bis 12, wobei die Wand (4) eine Innenwand des Tanks (2) ist und der Kopf (18) des Schafts mit der Wand (4) gekoppelt ist, indem er als Anschlag für diese dient.

## Claims

1. Accessory (8) for vehicle tank, comprising:
- a main part (10) of the accessory,
- at least one fastener (12) of the main part (10) to a tank, the main part (10) and the at least one fastener (12) being in one piece,
- a rod (14) comprising a body (16), having at least one rib (20) configured to be attached to the at least one attachment member (12), and a head (18), configured to be coupled to a wall of a tank,
the distance between at least one fixing member (12) and the head (18) of the rod being equal to a predetermined value,
**characterized in that** the at least one fastener (12) comprises proximal (24) and distal (28) relief shapes spaced from each other, the proximal relief shape (24) being located between the head (18) of the rod and the distal relief shape (28) when the stem (14) is attached to the at least one fastener (12), the proximal (24) and distal (28) relief shapes having a proximal orifice (32) and a distal orifice (36) respectively which are coaxial.

2. Accessory (8) according to the preceding claim, wherein at least one rib (20) extends all around the body (16) of the stem and has a shape that flares out towards the head (18) of the rod.

3. Accessory (8) according to any one of the preceding claims, wherein the proximal orifice (32) has a cross-section of area greater than that of a cross-section of the distal orifice (36).

4. Accessory (8) according to any one of the preceding claims, wherein the diameter of the distal orifice (36) is greater than the diameter of the body (16) of the rod and is such as to prevent the passage of at least one rib (20) through the distal orifice (36).

5. Accessory (8) according to any one of the preceding claims, wherein the at least one fastener (12) comprises flexible fins (34) extending into the proximal orifice (32) and permitting the passage of the body (16) of the rod and the at least one rib (20) through the proximal orifice (32).

6. Accessory (8) according to the preceding claim, wherein the flexible fins (34) are configured to block any displacement of the body (16) of the rod away from the distal relief shape (28) when the body (16) of the rod extends through the proximal orifice (32).

7. Accessory (8) according to any one of the preceding claims, wherein the main part (10) forms a heat shield, canister or baffle for a vehicle tank.

8. Accessory (8) according to any one of the preceding claims, wherein the number of fasteners (12) is equal to 1.

9. Accessory (8) according to any one of the preceding claims, wherein the proximal orifice (32) is of non-circular cross-section, the body (16) of the rod having, between the at least one rib (20) and the head (18), a non-circular cross-section configured to prevent rotation of the rod (14) in the proximal orifice (32).

10. Accessory (8) according to any one of the preceding claims, wherein the head (18) of the rod comprises a locating tooth (38) extending radially with respect to a main axis (22) of the rod (14).

11. A vehicle tank (2) comprising a wall (4) provided with an opening (6) and comprising an accessory (8) according to any one of the preceding claims coupled to the wall (4) extending through the opening (6).

12. A vehicle tank (2) according to claims 10 and 11, wherein the wall (4) of the tank (2) comprises a marking (40) positioned to align with the locating tooth (38).

13. A vehicle tank (2) according to any one of claims 11 to 12, wherein the wall (4) is an outer wall of the tank (2) and the accessory (8) is tightly coupled to the wall (4).

14. A vehicle tank (2) according to the preceding claim, wherein the head (18) of the rod is tightly attached to the wall (4).

15. A vehicle tank (2) according to any one of claims 11 to 12, wherein the wall (4) is an inner wall of the tank (2) and the head (18) of the rod is coupled to the wall (4) by serving as a stop for the wall.
